# EUROPEAN PATENT APPLICATION

(11) **EP 3 291 160 A1**
(43) Date of publication of application: **07.03.2018**
(21) Application number: 17188068.5
(22) Date of filing: 28.08.2017
(51) Int. Cl.: G06Q 30/00, G06Q 10/00

(54) **SEMICONDUCTOR PRODUCT QUALITY MANAGEMENT SYSTEM, SEMICONDUCTOR PRODUCT QUALITY MANAGEMENT METHOD, AND AUTOMOBILE**

(30) Priority: 02.09.2016 JP 2016171791
(71) Applicant: Renesas Electronics Corporation, Tokyo 135-0061 (JP)
(72) Inventor: YAMADA, Naoki, Gunma, Gunma 370-0021 (JP); MATSUMOTO, Yoshiyuki, Tokyo, Tokyo 135-0061 (JP); KIMURA, Hidefumi, Gunma, Gunma 370-0021 (JP)
(74) Representative: Glawe, Delfs, Moll

(57) **Abstract**

An object of the present invention is to start analyzing the cause of a failure within a short period of time after the occurrence of the failure in the market and to reduce the target range of enclosure as small as possible by ensuring a longer period of time to narrow down the target range of products assumed to contain a failure actualization risk of the same type.

In the case where first ID information is received from a semiconductor device with a failure actualized, a semiconductor product quality management server extracts second ID list information containing a failure actualization risk of the same type on the basis of manufacturing history information extracted from a semiconductor manufacturing history information DB using the first ID as a key, and broadcasts the same to an automobile. In the case where a failure is detected, the semiconductor device transmits third ID information stored in a nonvolatile memory to the semiconductor product quality management server. In the case where the second ID list information is received, information related to presence or absence of the failure actualization risk of the same type is output to a driver depending on whether or not the third ID is included in the list information.

## Description

### CROSS-REFERENCE TO RELATED APPLICATIONS

The disclosure of Japanese Patent Application No. 2016-171791 filed on September 2, 2016 including the specification, drawings and abstract is incorporated herein by reference in its entirety.

### BACKGROUND

The present invention relates to a semiconductor quality management technique, and particularly to an effective technique applied to a semiconductor product quality management system and a semiconductor product quality management method that support quality management of an on-vehicle semiconductor product or the like required to have high quality and high reliability.

For example, an on-vehicle semiconductor product is to be mounted on a vehicle such as an automobile that may directly affect the life or body of an end user. Therefore, extremely high levels of quality and reliability are required in some cases as compared to a semiconductor product mounted on a consumer electronic device and the like. In the case where a failure or problem occurs in a customer of the manufactured semiconductor product or in the market of an automobile or the like that is a final product, in general, recognizing the phenomenon of the failure and analysis for investigation of the cause are first performed in the customer of the semiconductor product. For example, in the case where it is difficult to specify the cause of the failure or there is a doubt in the semiconductor product, a semiconductor manufacturer is requested to analyze, and electrical analysis is conducted by the semiconductor manufacturer.

Thereafter, for the identified cause, the semiconductor manufacturer narrows down the target range of products assumed to contain a failure actualization risk of the same type on the basis of manufacturing history information and the like of the failed product, and already-manufactured products are enclosed within the target range to stop flowing out to the market. Then, screening is carried out to determine whether or not further treatment is necessary for the enclosed already-manufactured products. In the case where the content of the failure cannot be handled by the screening and is serious such as affecting human life, automobiles equipped with the products in the target range are recalled.

As a technique relating to a more reliable implementation of recall, for example, Japanese Unexamined Patent Application Publication No. 2014-238803 describes a recall information informing technique in which recall information is received from a management server by a smartphone of a user connectable to the Internet, a product code is read by a QR code (registered trademark) or the like attached to a product, and whether there is matching product information in the recall information is detected and notified.

### SUMMARY

Due to recent advanced functions of automobiles, the number of semiconductor products mounted on automobiles is increasing at an accelerating rate. In addition, the number of automobiles equipped with such semiconductor products is also increasing. Further, with the further evolution of a technique such as ADAS (Advanced Driving Assistant System) in the future, the number of semiconductor products mounted on automobiles is expected to further increase.

Therefore, even if the semiconductor products have the same defect rate, the number of broken automobiles (the number of failed products) inevitably increases rapidly. As the number of failures increases, resources required for analysis, treatment, correction, and countermeasures also increase, and the resources of the same scale as the current situation cannot inevitably handle, or the handling time increases. In addition, the increase in the handling time inevitably leads to an increase in the failure rate in the market. On the other hand, along with the technological advancement of semiconductor, a period of time required to analyze a failure also increases. Therefore, in order to perform enclosure within a period of time requested by a customer, the target range of the enclosure has to be wider than necessary. In addition, as a result of combining these factors, the number of recalls in the market will increase.

In order to handle failures and problems with finite resources, it is important not to increase the target range (the number of units) of enclosure or recall. In order to realize this, it is important to start analyzing the cause of the failure within a possible short period of time after the occurrence of the failure and to reduce the target range of the enclosure as small as possible by ensuring a longer period of time to narrow down the target range of products assumed to contain a failure actualization risk of the same type. In this regard, according to the related art, it is possible to more reliably transmit recall information to the owner or the like possessing the product, but shortening a period of time required to take measures such as recall and enclosure is not considered.

The other objects and novel features will become apparent from the description of the specification and the accompanying drawings.

The following is a summary of the representative outline of the inventions disclosed in the application.

A semiconductor product quality management system according to an embodiment has: a semiconductor product quality management server having a function of supporting quality management of a semiconductor product; a semiconductor manufacturing history information database in which information related to manufacturing history of each semiconductor product is accumulated; and a semiconductor device that is mounted on a final product and can communicate with the semiconductor product quality management server via a network.

The semiconductor product quality management server has:
an input/output unit that transmits and receives information to/from the semiconductor device via the network; and a failure handling processing unit that extracts, in the case where first ID information identifying a first semiconductor device is received from the first semiconductor device with a failure actualized via the input/output unit, second ID list information identifying one or more second semiconductor devices containing a failure actualization risk of the same type on the basis of manufacturing history information of the first semiconductor device extracted from the semiconductor manufacturing history information database using the first ID as a key, and broadcasts the same to the semiconductor device mounted on each final product via the input/output unit.

Further, the semiconductor device has: a wireless communication unit that wirelessly transmits and receives information to/from the semiconductor product quality management server via the network; a nonvolatile memory in which ID information identifying the semiconductor device is preliminarily stored; and a processor. In addition, in the case where a failure of the semiconductor device is detected by a process of the processor, third ID information stored in the nonvolatile memory is read and transmitted to the semiconductor product quality management server via the wireless communication unit. In the case where the second ID list information is received from the semiconductor product quality management server, the third ID information stored in the nonvolatile memory is read, and information related to presence or absence of the failure actualization risk of the same type is output to a driver depending on whether or not the third ID is included in the received second ID list information.

According to the embodiment, it is possible to start analyzing the cause of the failure within a possible short period of time after the occurrence of the failure in the market and to reduce the target range of the enclosure as small as possible by ensuring a longer period of time to narrow down the target range of products assumed to contain the failure actualization risk of the same type.

### BRIEF DESCRIPTION OF THE DRAWINGS

Fig. 1 is a diagram showing an outline of a configuration example of a semiconductor product quality management system that is one embodiment of the present invention;
Fig. 2 is a flowchart showing an outline of an example of a manufacturing method of a semiconductor device in the embodiment of the present invention;
Fig. 3 is a flowchart showing an outline of an example of a flow of processes in the case where the semiconductor device detects a failure in the embodiment of the present invention; and
Fig. 4 is a diagram showing an outline of an example of handling content in the present situation when a failure is actualized in an on-vehicle semiconductor device.

### DETAILED DESCRIPTION

Hereinafter, an embodiment of the present invention will be described in detail on the basis of the drawings. In all the drawings for describing the embodiment, the same parts are followed by the same signs in principle, and repeated explanations thereof will be omitted. On the other hand, a part described with a sign in a certain drawing will not be illustrated again when explaining the other drawings, but may be referred to with the same sign. Further, the embodiment will be described while being compared with the related art to easily understand the features of the present invention in the following description.

### <Outline>

As described above, semiconductor manufacturers are required to produce on-vehicle semiconductor products at extremely high levels in some cases as compared to those for consumer use in terms of, for example, environmental tolerance such as operable temperature and humidity, vibration and static electricity, market tolerance such as a failure rate in the market and product lifetime, an allowable period of time from discovering of a defect to formulating and reporting of measures, and a supply system such as the duration of production and delivery deadlines. Therefore, in the case where a failure occurs in an automobile that is a final product in the market, it is necessary to analyze, treat, correct, and take countermeasures for the failure as soon as possible.

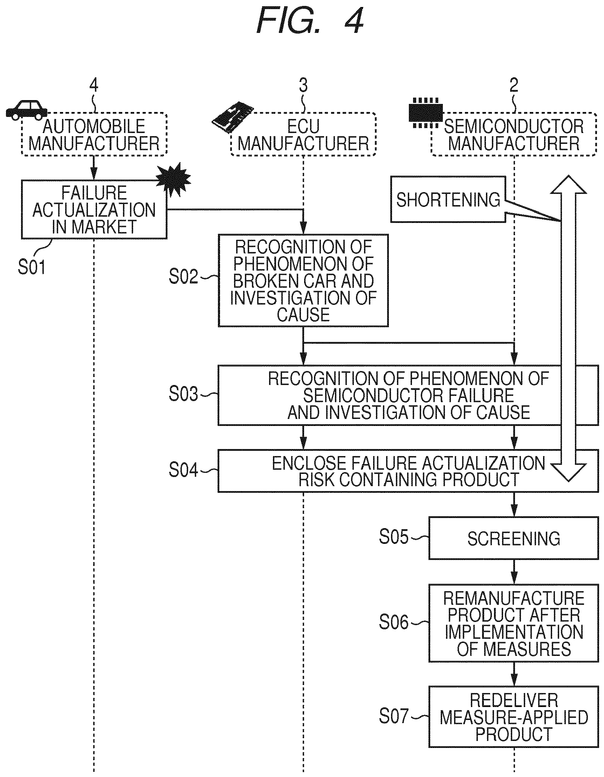

Fig. 4 is a diagram showing an outline of an example of handling content in the present situation when a failure is actualized in an on-vehicle semiconductor device. In the case where a failure is actualized in an automobile that is a final product in the market, an initial response is made by automobile dealers and automobile manufacturers (hereinafter, these will be generally described as an automobile manufacturer 4 in some cases) (S01).

In addition, in the case where it is considered that the failure is related to a semiconductor product, the phenomenon is recognized in the broken automobile and the cause of the failure is investigated by a manufacturer of an ECU (Electronic Control Unit) including the semiconductor product or other electrical components, namely, a manufacturer (hereinafter, generally described as an ECU manufacturer 3 in some cases) corresponding to a semiconductor customer in a relationship with a semiconductor manufacturer 2 (S02) . This includes a case in which a failure occurred in a semiconductor customer before being mounted on an automobile that is a final product. A period of time required before the response is made is about one day after the failure is actualized or about one month if it takes time to investigate the cause in some cases.

In the case where it is difficult for the ECU manufacturer 3 to investigate the cause or there is a doubt in the semiconductor product, the semiconductor manufacturer 2 is also requested to analyze the cause. From this stage, the semiconductor manufacturer 2 recognizes the phenomenon of the failure of the semiconductor product and investigates the cause of the failure by electrical analysis and the like (S03). In the case where the failure within the guaranteed specification of the product is not reproduced after the analysis was carried out, the semiconductor manufacturer 2 replies the fact to the ECU manufacturer 3, and finishes the response.

On the other hand, in the case where the cause of the failure can be identified, the target range of products assumed to contain a failure actualization risk of the same type is narrowed down on the basis of the manufacturing history information and the like of the failed product, and already-manufactured products are enclosed within the target range to stop flowing out to the market (S04) . Here, on the basis of information related to enormous manufacturing history possessed independently by the semiconductor manufacturer 2, products in the target range to be enclosed are narrowed down from the manufacturing history information related to the failed product. In this case, a product that cannot be clearly determined to be broken but has a possibility of the actualization of a failure is to be enclosed in a wider range on the basis of the probability of occurrence or the like in a certain period of time.

Then, screening (selection) is performed for the enclosed already-manufactured products in accordance with the cause of the failure as a process before a fundamental measure is implemented (S05). As an example of the screening, for example, in the case where inspection of the product is missing, an inspection item is added to perform re-inspection. Further, in the case where material used for the product is defective, the quality level of the material is optimized by additionally performing a reliability test and the like, and the product for which the material was used is selected on the basis of the use history of the material. Further, in the case where there is a problem with manufacturing conditions, the manufacturing conditions are reviewed, management conditions are corrected, and inspection standards are optimized. In addition, the product is selected on the basis of the optimized conditions and standards. In the case where the content of the problem is serious such as affecting human life and cannot be handled by the screening, automobiles equipped with the products in the target range are recalled.

On the other hand, regarding products to be manufactured in the future, the manufacturing of the semiconductor product is resumed after a fundamental measure against the specified cause of a failure is implemented (S06), and the product with the fundamental measure applied is redelivered to the ECU manufacturer 3 and the like (S07). A period of time required until the redelivery may be about one week after a failure is actualized or may be about six months if it takes time to investigate the cause, implement measures, and remanufacture the product.

As described above, in order to respond to failures and problems with finite resources, it is important for the semiconductor manufacturer 2 to start analyzing the cause of the failure within a possible short period of time after the failure is actualized and to ensure a longer period of time to narrow down the target range of products assumed to contain the failure actualization risk of the same type. Accordingly, it is possible to contain the failure of the same type that follows before being actualized in the market and to reduce the target range of enclosure and recall as small as possible.

In view of this, a semiconductor product quality management system that is one embodiment of the present invention shortens a period of time required from the time a failure is actualized in the market to the time products are enclosed by the semiconductor manufacturer 2 analyzing the investigation of the cause. Namely, as shown in Fig. 4, a serial process was performed in the past in such a manner that after a semiconductor customer such as the ECU manufacturer 3 handled an automobile with a failure actualized, the semiconductor manufacturer 2 handled the failed semiconductor product. On the contrary, in parallel with the handling of the automobile with the failure actualized by the automobile manufacturer 4 and the ECU manufacturer 3, the failed semiconductor product can be immediately handled by the semiconductor manufacturer 2 in the embodiment. <System configuration>

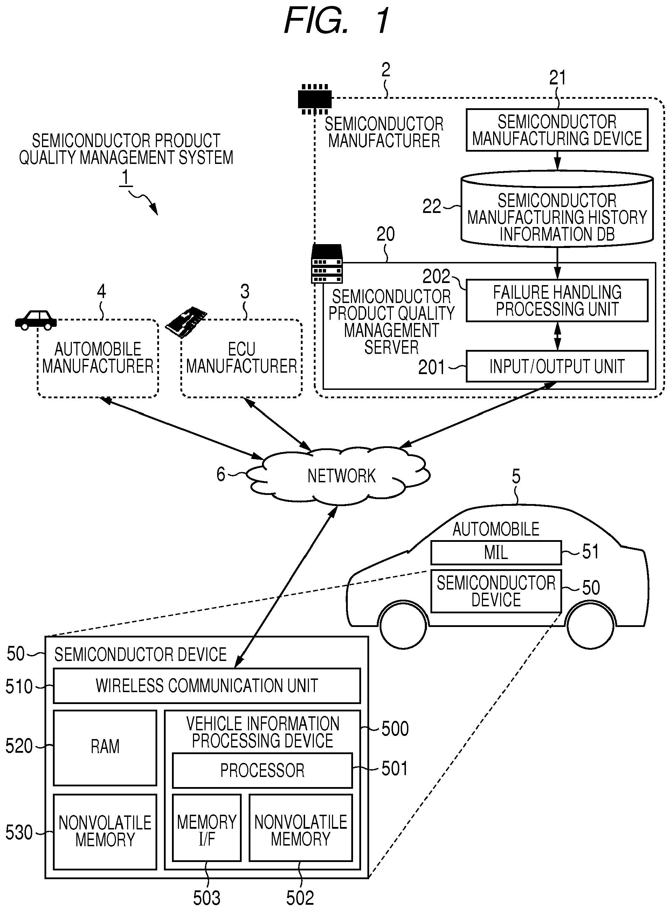

Fig. 1 is a diagram showing an outline of a configuration example of a semiconductor product quality management system that is one embodiment of the present invention. The semiconductor product quality management system 1 of the embodiment is an information processing system that can immediately handle a failed semiconductor product in the semiconductor manufacturer 2 when a failure in an automobile 5 is actualized, shortens a period of time required until enclosure, and supports to reduce the target range as small as possible by improving the accuracy of the enclosure.

For example, the semiconductor product quality management system 1 has a semiconductor product quality management server 20 possessed by the semiconductor manufacturer 2 and a semiconductor device 50 mounted on the automobile 5, and these can be coupled to and communicated with each other via a network 6 such as the Internet.

The semiconductor product quality management server 20 is, for example, a server system configured using a server device, a virtual server constructed on a cloud computing service, and the like. Various functions to be described later are realized by a CPU (Central Processing Unit) (not shown) executing, for example, an OS (Operating System) (not shown), a DBMS (Data Base Management System), middleware such as a Web server program, and software running on the middleware. In order to realize this function, the semiconductor product quality management server 20 has respective units such as an input/output unit 201 and a failure handling processing unit 202 which are implemented as software.

The input/output unit 201 provides an input/output interface function for the network 6. Specifically, the input/output unit 201 receives a notification from the semiconductor device 50 of the automobile 5 that has detected a failure from the cloud environment via the network 6. Further, the input/output unit 201 broadcasts information of an ID list of semiconductor products containing the failure actualization risk extracted by the failure handling processing unit 202, to be described later, to the cloud environment via the network 6.

On the basis of the unique ID of the semiconductor device 50 included in the notification from the semiconductor device 50 obtained via the input/output unit 201, the failure handling processing unit 202 extracts the ID of the semiconductor product containing the failure actualization risk by referring to a semiconductor manufacturing history information database (DB) 22 possessed by the semiconductor manufacturer 2. Then, the list of the extracted IDs is broadcasted to each automobile 5 (semiconductor device 50) via the input/output unit 201.

In the semiconductor manufacturing history information DB 22, enormous information related to the manufacturing history of each semiconductor device 50 manufactured by a semiconductor manufacturing device 21 is recorded and accumulated. Here, various manufacturing history information related to a factory, manufacturing, material, a test, inspection, a device, and the like is recorded in association with individual identification information such as an ID that is uniquely assigned to the semiconductor device 50 and is electrically written. The manufacturing history information recorded in the semiconductor manufacturing history information DB 22 is data that is normally managed by the semiconductor manufacturer 2 in a unified manner and is used only inside without being disclosed to the outside. It should be noted that the semiconductor manufacturing history information DB 22 may be managed in a database server or the like in a unified manner, or all or a part thereof (or a replica thereof) may be held in the semiconductor product quality management server 20.

The ECU manufacturer 3 and the automobile manufacturer 4 may individually have the above-described mechanisms in the semiconductor manufacturer 2. In this case, unique identification numbers each of which is managed in association with the manufacturing history information are notified to the ECU manufacturer 3 and the automobile manufacturer 4 from the automobile 5 with a failure detected via the network 6. For example, the identification numbers are those printed on a circuit board and a package configuring an ECU or the like.

The semiconductor device 50 mounted on each automobile 5 is mounted as, for example, a constitutional element of the interior of the driver's seat in a state where the semiconductor device 50 is mounted in an ECU or the like. Therefore, although the semiconductor device 50 also has a function of inputting and outputting and controlling various devices and instruments included in a dashboard and an instrument panel, only the main parts related to the embodiment are illustrated in the example of Fig. 1.

For example, the semiconductor device 50 is configured as a package including a plurality of semiconductor integrated circuits built on a silicon chip, and has respective units such as a vehicle information processing device 500, a wireless communication unit 510, a RAM (Random Access Memory) 520, and a nonvolatile memory 530. The nonvolatile memory 530 is configured using, for example, FMONOS (Flash Metal Oxide Nitride Oxide Semiconductor), an electronic fuse, and the like.

The vehicle information processing device 500 has a function of inputting and processing various kinds of information related to the automobile 5 and outputting control information and the like, and further has, for example, respective units such as a processor 501, a nonvolatile memory 502, and a memory interface (I/F) 503. The processor 501 accesses various memories such as the nonvolatile memory 502 in the vehicle information processing device 500, the external nonvolatile memory 530 and the RAM 520 via the memory I/F 503 to execute a program and input and output data. The functions also include a self-diagnosis function for detecting problems of its own operation and state, which is generally included in the semiconductor device 50.

For example, the wireless communication unit 510 is coupled to an external antenna mechanism (not shown), and has a function of communicating with the semiconductor product quality management server 20 while being coupled to the network 6 by a function such as short distance wireless communication such as Wi-Fi (registered trademark) or Bluetooth (registered trademark), or 4G mobile communication such as LTE (Long Term Evolution).

In the case where the vehicle information processing device 500 detects a failure or problem of the automobile by the self-diagnosis function, the fact is displayed on a MIL (Malfunction Indication Lamp) 51 or the like for the semiconductor device 50 provided on the instrument panel or the like of the interior of the driver's seat of the automobile 5. For example. Further, the fact is transmitted to the semiconductor product quality management server 20 via the network 6 by the wireless communication unit 510. In this case, the unique ID of the semiconductor device 50 written in the nonvolatile memory 502 or the nonvolatile memory 530 is read and transmitted.

On the other hand, even in a normal state where no failure is detected, as will be described later, when information such as the ID of the semiconductor device 50 containing the failure actualization risk is received by the wireless communication unit 510, the failure actualization risk of the automobile is determined on the basis of the received information, and the content is reflected on the display of the MIL 51. Further, the wireless communication unit 510 transmits the determination result of the failure actualization risk of the automobile to the semiconductor product quality management server 20 via the network 6, thereby feeding back the result.

As described above, the embodiment is characterized in that the semiconductor device 50 mounted on the automobile 5 can transmit and receive the ID of the semiconductor device 50 when a failure is detected or information of the list of the IDs of the semiconductor devices 50 containing the failure actualization risk to/from the semiconductor product quality management server 20 via the network 6 without manual intervention.

It should be noted that even in a normal state where no failure is detected, the unique ID of the semiconductor device 50 written in the nonvolatile memory 502 or the nonvolatile memory 530 may be read to be transmitted to the semiconductor product quality management server 20 by the wireless communication unit 510 via the network 6. Thus, for example, it is possible to notify the semiconductor product quality management server 20 that the semiconductor device 50 is normally operated.

The timing of the notification can be appropriately set, for example, periodically or when a predetermined event is detected, or when a request is received from the outside such as the driver or the semiconductor product quality management server 20. For example, even in the case where a failure of a type in which its own unique ID cannot be transmitted by the wireless communication unit 510 occurs, it is possible to recognize that there is some abnormality in the semiconductor device 50 by periodically notifying after confirming that there is no notification of ID in a certain period of time in the semiconductor product quality management server 20 (heartbeat function).

### <Manufacturing method of semiconductor device>

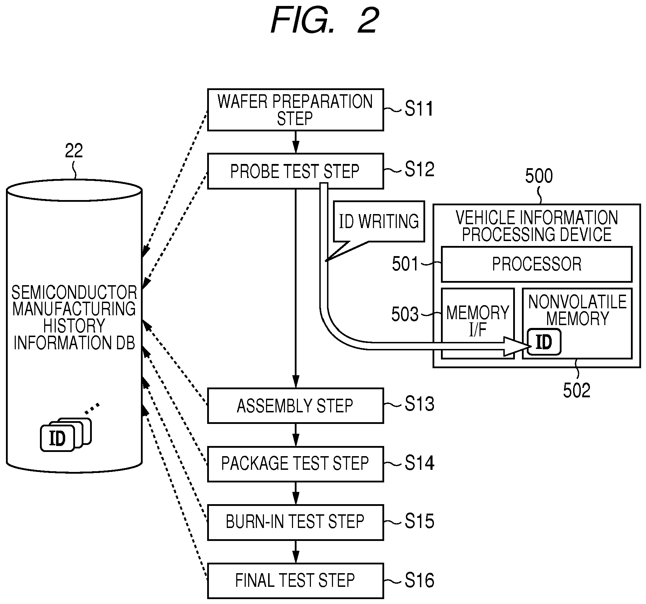

Fig. 2 is a flowchart showing an outline of an example of a manufacturing method of the semiconductor device 50 in the embodiment. First, as a preliminary step, a semiconductor wafer (hereinafter, simply written as a "wafer" in some cases) is prepared in a wafer preparation step (S11). Although not shown in the drawing, the wafer prepared in the step has, for example, a substantially circular planar shape, and the main surface (device formation surface) thereof is partitioned into a plurality of chip regions.

In the wafer preparation step (S11), for example, a semiconductor substrate having a main surface is prepared first. Thereafter, a plurality of semiconductor elements such as transistors and diodes is formed on the main surface of the semiconductor substrate. Thereafter, a wiring layer is laminated on the main surface of the semiconductor substrate. A plurality of semiconductor integrated circuits is formed on the main surface side of the wafer by electrically coupling the semiconductor elements on the main surface via a plurality of wires provided in each wiring layer. Thereafter, a protective film (a passivation film and an insulating film) is formed so as to cover the wiring layer. Through these processes, it is possible to obtain the wafer having a plurality of regions of semiconductor chips (hereinafter, simply written as "chips" in some cases) on which integrated circuits configuring the semiconductor device 50 are formed.

Next, when the preparation of the wafer is completed, an electrical test using a probe card, a probe inspection device, and the like is performed in a probe test (wafer test) step (S12) for the chips formed on the wafer. A unique ID is assigned to the chip determined to be non-defective, and the ID is written into the nonvolatile memory 502 or the nonvolatile memory 530 of the chip. The example of Fig. 2 shows a case in which the ID is written into the nonvolatile memory 502 in the vehicle information processing device 500.

Next, as a post process, the wafer is divided (diced) and individualized for each chip area to obtain a plurality of chips in an assembly step (S13), and the chips determined to be non-defective in the probe test step (S12) are assembled into a package as the semiconductor device 50. Thereafter, in order to detect defective assembly, an electrical test is performed for the packaged chip (package product) using a tester device (semiconductor inspection device) such as a package probe or the like in a package test step (S14) if necessary.

Further, the package determined to be non-defective in the package test step (S14) is tested in a state where stress is accelerated by applying high temperature and high voltage to the package in a burn-in test step (S15) . Further, the package determined to be non-defective in the burn-in test step (S15) is tested in detail in terms of functions and electrical characteristics using, for example, the tester device or the like in a final test step (S16). The package determined to be non-defective in the final test step (S16) is shipped to the ECU manufacturers 3 or the like that is a semiconductor customer. It should be noted that the above-described flow is an outline of main steps of the chip manufacturing process, and various modified examples can be applied.

In a series of the above-described processes, various kinds of information such as environments, conditions, and processing results in the respective steps are associated with the information of the ID of each semiconductor device 50 (chip), and the all kinds of information are stored into the semiconductor manufacturing history information DB 22 as the manufacturing history information. Therefore, the semiconductor manufacturer 2 can recognize all the detailed history of the target semiconductor device 50 with the ID of the semiconductor device 50 as a key. In addition, the ID information is written in the nonvolatile memory 502 or the nonvolatile memory 530 of the semiconductor device 50, and can be read by a process of the processor 501.

It should be noted that even in the ECU manufacturer 3 or the automobile manufacturer 4 that incorporates the manufactured semiconductor device 50 into its own product (a semiconductor product, a final automobile, or the like), identification information such as an ID may be individually written into the nonvolatile memory 530 or the like of the semiconductor device 50 in each manufacturing step. Thus, not only the semiconductor manufacturer 2 but also the ECU manufacturer 3 and the automobile manufacturer 4 can obtain via the network 6 the information such as the ID for identifying the semiconductor product or the automobile in which the semiconductor device 50 is incorporated from the semiconductor device 50 which has detected the failure.

### <Flow of process when failure occurs>

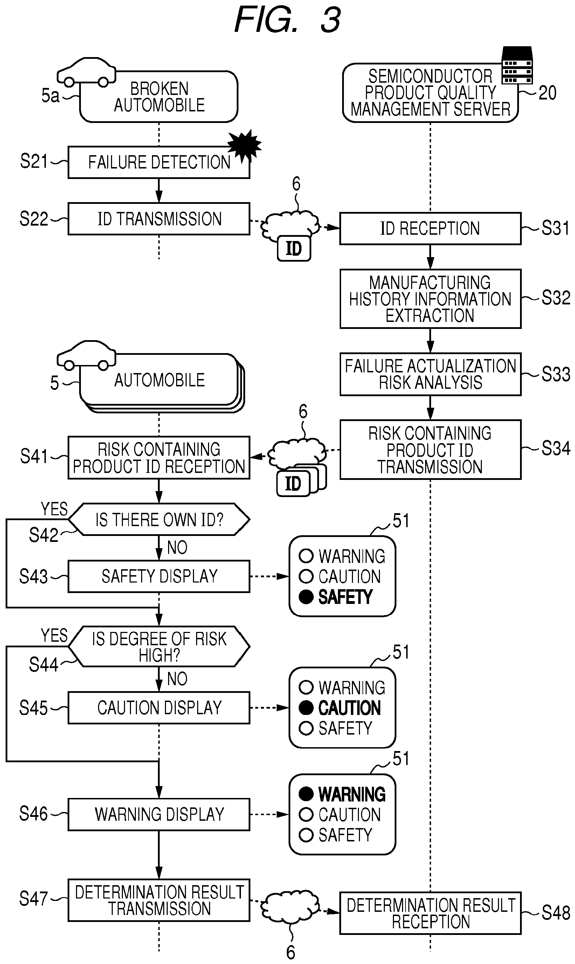

Fig. 3 is a flowchart showing an outline of an example of a flow of processes in the case where the semiconductor device 50 mounted on the automobile 5 detects a failure in the embodiment. The semiconductor device 50 first detects a failure by the self-diagnosis function in a broken vehicle 5a (S21). With the detection as a trigger, the vehicle information processing device 500 reads the information of the ID of the semiconductor device 50 written in the nonvolatile memory 502 or the nonvolatile memory 530 by a process of the processor 501, and the information is transmitted to the semiconductor product quality management server 20 via the network 6 by the wireless communication unit 510 (S22). At this time, reference information such as various kinds of diagnostic information and a vehicle status grasped by the vehicle information processing device 500 may be added and transmitted in addition to the ID information.

When the ID information is received from the broken automobile 5a by the input/output unit 201 in the semiconductor product quality management server 20 (S31), the failure handling processing unit 202 extracts the corresponding manufacturing history information from the semiconductor manufacturing history information DB 22 using the ID as a key (S32). Then, on the basis of the obtained manufacturing history information and the manufacturing history information related to other manufactured products recorded in the semiconductor manufacturing history information DB 22, products having the failure actualization risk of the same type are analyzed (S33).

A method of the analysis on the basis of the manufacturing history information is not particularly limited, and a known method can be appropriately adopted. For example, a wafer including the semiconductor device 50 mounted on the broken automobile 5a is identified from the manufacturing history information, and the result information in the probe test step (S12) of Fig. 2 is obtained from the manufacturing history information of the wafer. Then, the position of the chip determined to be defective on the wafer and the position of the chip on the wafer corresponding to the semiconductor device 50 with the failure actualized are identified from the result information, and a chip containing the failure actualization risk is estimated together with the degree of risk on the basis of the distribution and regularity of the positions of these defective and failed chips on the wafer. Instead of or in addition to this, it is also possible to estimate on the basis of the matching/similarity degree of other manufacturing conditions such as manufacturing time and a manufacturing place.

For a chip in which the estimated degree of the failure actualization risk is equal to or larger than a predetermined threshold value, the ID information of the semiconductor device 50 related to the chip is listed together with the degree of risk by assuming as containing the failure actualization risk. Then, this is broadcasted to all the automobiles 5 by the input/output unit 201 via the network 6 (S34).

Each automobile 5 allows the wireless communication unit 510 of the semiconductor device 50 to receive the list information of the IDs of the semiconductor devices 50 containing the failure actualization risk via the network 6 (S41). In the case where the ID list information is received, each automobile 5 allows the processor 501 of the vehicle information processing device 500 to read its own ID information recorded in the nonvolatile memory 502 or the nonvolatile memory 530, and determines whether or not its own ID is included in the received ID list information (S42).

In the case where its own ID is not included (No in S42), the fact that the semiconductor device 50 is safe is displayed by the MIL 51 to be notified to the driver by assuming as no (or sufficiently low) risk of actualization of the target failure (S43). In the example of Fig. 3, the "safety" lamp is lit in green in a manner similar to a traffic signal. Thereby, a sense of security can be provided to the driver. In this case, since it is considered that the "safety" lamp is already lit in green during the driving of the automobile 5, there is no need to perform any additional process, and the "safety" lamp may be continued to be lit in green.

In the case where its own ID is included in the received ID list information in step S42 (Yes in S42), it is determined whether or not the degree of risk corresponding to each ID included in the list information is equal to or larger than the predetermined threshold value (S44) . In the case where the degree of risk is smaller than the predetermined threshold value (No in S44), for example, the driver is alerted by the notification of the MIL 51 by assuming that the risk of actualization of the target failure is not so high as to require prompt response but has a certain degree (S45) . The driver can be prompted to use a planned maintenance service before the risk becomes high. In the example of Fig. 3, the "caution" lamp is lit or blinked in yellow.

In the case where the degree of risk is equal to or larger than the predetermined threshold value in Step S44 (Yes in S44), for example, a warning is displayed by the MIL 51 to be notified to the driver by assuming that the risk of actualization of the target failure is so high as to require prompt response (S46). In the example of Fig. 3, the "warning" lamp is lit or blinked in red. Accordingly, a trigger for appropriate response can be provided to the driver at an early stage. When recognizing that the "warning" lamp is lit, the driver informs, for example, a base such as the automobile manufacturer 4, a dealer, or a customer center where maintenance services can be provided, or promptly moves the automobile 5 to the automobile manufacturer 4, the dealer, or the like.

Further, the semiconductor device 50 of each automobile 5 feeds back by allowing the wireless communication unit 510 to transmit information related to the determination result in Step S42, namely, information on whether or not its own ID is included in the received ID list information to the semiconductor product quality management server 20 via the network 6 (S47 and S48). Information related to the content notified to the driver by the MIL 51 in Steps S43, S45, and S46 may be transmitted.

As described above, when one broken automobile 5a is actualized in the market, the semiconductor product quality management server 20 (namely, the semiconductor manufacturer 2) directly receives the information of the target semiconductor device 50 in the embodiment. Then, the handling of the failed semiconductor product in the semiconductor manufacturer 2 can be performed in parallel with the handling of the automobile with the failure actualized in the automobile manufacturer 4 and the ECU manufacturer 3.

Further, in the handling of the automobile with the failure actualized in the semiconductor manufacturer 2, the communication/information processing time required to transmit and receive the ID information via the network 6 and to analyze the risk using the semiconductor manufacturing history information DB 22 is used against the physical time in the traditional flow of "collection of a failed product in the market → analysis of the cause of the failure → assumption of a failure influential range → recall and enclosure of target products". Accordingly, it is possible to greatly shorten the TAT (Turn Around Time) from starting analysis of the cause of the failure after the failure is actualized to narrowing down the target range of the products assumed to contain the failure actualization risk of the same type, and it is possible to contain the subsequent failure actualization of the same type before failure. Further, the failure actualization risk is discriminated using the semiconductor manufacturing history information DB 22 accumulated in the semiconductor manufacturer 2, so that the accuracy of risk discrimination can be increased and the target range of enclosure can be reduced as small as possible.

It should be noted that the semiconductor product quality management system 1 allows the driver of the automobile 5 having a high degree of the failure actualization risk to recognize the risk by turning on the warning" lamp, and thereafter the driver or the like appropriately informs the automobile manufacturer 4, a dealer, or the like, or moves the automobile 5 in the embodiment. However, the present invention is not limited to such a configuration. In accordance with the further evolution of the ADAS technology in the future, it is also technically possible to configure in such a manner that, for example, the automobile 5 that determines itself as a "warning" state is moved to a maintenance service base by self-driving if possible by judging on the basis of various kinds of situations such as the content of the failure, the degree of risk, and the distance to a nearby base where maintenance services are provided.

The invention made by the inventors has been concretely described above on the basis of the embodiment. However, it is obvious that the present invention is not limited to the above-described embodiment, and can be variously changed without departing from the gist thereof. For example, the embodiment has been described in detail in order to easily understand the present invention, and is not necessarily limited to that having all the configurations described above. Further, it is possible to add, delete, and replace other configurations with respect to a part of the configurations of the embodiment.

For example, when each automobile 5 receives from the semiconductor product quality management server 20 the information of the list of the semiconductor devices 50 containing the failure actualization risk, the result obtained by comparing the content with its own ID is notified to the driver by displaying the same in a manner similar to a traffic signal by the MIL 51 in the above-described embodiment. However, the embodiment is not limited to this. For example, any output means capable of notifying the driver of the state, such as displaying a notification message on an on-vehicle display or notifying by voice, can be appropriately adopted.

Further, the semiconductor manufacturer 2 receives the information of the ID of the failed semiconductor product in the market via the network 6, and can promptly handle the failed semiconductor product in the above-described embodiment. However, the embodiment is not limited to the semiconductor manufacturer 2 that can handle such a problem. For example, the ECU manufacturer 3 and the automobile manufacturer 4 also may have the same mechanism, and may receive the identification information such as the IDs of the failed semiconductor product and broken automobile in the market via the network 6 so as to promptly handle the same.

Further, as a semiconductor product to be subjected to quality management, the on-vehicle semiconductor device 50 mounted on the automobile 5 has been described as an example in the above-described embodiment. However, the present invention is not limited thereto. The final product on which the semiconductor device 50 is mounted may be a vehicle other than an automobile (a transportation vehicle, a construction machine, a railroad vehicle, or the like), or a mobile body such as an aircraft or a ship. Further, the present invention can be widely applied to devices and apparatuses including home appliances and the like on which semiconductor devices are mounted.

Further, each of the configurations, functions, processing units, processing means, and the like in the above-described embodiment may be realized by hardware by designing a part or all thereof using, for example, an integrated circuit. Further, each of the above-described configurations, functions, and the like may be realized by software so that a processor interprets and executes a program realizing each function. Information such as a program, a table, a file, or the like that realizes each function can be stored in a recording device such as a memory, a hard disk, or an SSD (Solid State Drive), or a recording medium such as an IC card, an SD card, or a DVD.

Further, the control lines and the information lines that are considered to be necessary for explanation are illustrated in each of the drawings, and all the control lines and the information lines to be mounted are not necessarily illustrated. In fact, almost all the configurations may be considered to be mutually coupled.

The present invention can be used for a semiconductor product quality management system, a semiconductor product quality management method, and an automobile that support quality management of an on-vehicle semiconductor product or the like that is required to have high quality and high reliability.

## Claims

1. A semiconductor product quality management system comprising:
a semiconductor product quality management server having a function of supporting quality management of a semiconductor product;
a semiconductor manufacturing history information database in which information related to manufacturing history of each semiconductor product is accumulated; and
a semiconductor device that is mounted on a final product and can communicate with the semiconductor product quality management server via a network,
wherein the semiconductor product quality management server has:
an input/output unit that transmits and receives information to/from the semiconductor device via the network; and
a failure handling processing unit that extracts, in the case where first ID information identifying a first semiconductor device is received from the first semiconductor device with a failure actualized via the input/output unit, second ID list information identifying one or more second semiconductor devices containing a failure actualization risk of the same type on the basis of manufacturing history information of the first semiconductor device extracted from the semiconductor manufacturing history information database using the first ID as a key, and broadcasts the same to the semiconductor device mounted on each final product via the input/output unit,
wherein the semiconductor device has:
a wireless communication unit that wirelessly transmits and receives information to/from the semiconductor product quality management server via the network;
a nonvolatile memory in which ID information identifying the semiconductor device is preliminarily stored; and
a processor, and
wherein in the case where a failure of the semiconductor device is detected by a process of the processor, third ID information stored in the nonvolatile memory is read and transmitted to the semiconductor product quality management server via the wireless communication unit; in the case where the second ID list information is received from the semiconductor product quality management server, the third ID information stored in the nonvolatile memory is read; and information related to presence or absence of the failure actualization risk of the same type is output to a driver depending on whether or not the third ID is included in the received second ID list information.

2. The semiconductor product quality management system according to Claim 1,
wherein the semiconductor device outputs the fact of being safe to the driver by a process of the processor in the case where the third ID stored in the nonvolatile memory is not included in the second ID list information received from the semiconductor product quality management server.

3. The semiconductor product quality management system according to Claim 1,
wherein the semiconductor device outputs a caution or a warning to the driver by a process of the processor on the basis of information of the degree of risk related to the corresponding second ID in the case where the third ID stored in the nonvolatile memory is included in the second ID list information received from the semiconductor product quality management server.

4. A semiconductor product quality management method comprising the steps of:
detecting a failure by a semiconductor device that is mounted on each final product and can communicate with a semiconductor product quality management server via a network;
reading first ID information preliminarily stored in a nonvolatile memory by the semiconductor device having detected the failure and transmitting the first ID to the semiconductor product quality management server via the network by wireless communications;
receiving the first ID via the network by the semiconductor product quality management server;
extracting, by the semiconductor product quality management server, information of manufacturing history of a first semiconductor device using the first ID as a key from a semiconductor manufacturing history information database in which information related to manufacturing history of each semiconductor product is accumulated;
extracting, by the semiconductor product quality management server, second ID list information identifying one or more second semiconductor devices containing a failure actualization risk of the same type on the basis of the extracted information of the manufacturing history of the first semiconductor device;
broadcasting the second ID list information to the semiconductor device mounted on each final product by the semiconductor product quality management server;
receiving the second ID list information via the network by the semiconductor device of each final product; and
reading third ID information stored in a nonvolatile memory by the semiconductor device of each final product and outputting information related to presence or absence of the failure actualization risk of the same type to a driver depending on whether or not the third ID is included in the received second ID list information.

5. An automobile,
wherein a semiconductor device having a wireless communication unit that wirelessly transmits and receives information via a network, a nonvolatile memory, and a processor is mounted,
wherein third ID information identifying the semiconductor device is preliminarily stored in the nonvolatile memory, and
wherein the third ID information stored in the nonvolatile memory is read and transmitted via the wireless communication unit by a process of the processor.

6. An automobile,
wherein a semiconductor device having a wireless communication unit that wirelessly transmits and receives information via a network and a processor is mounted, and
wherein second ID list information identifying one or more semiconductor devices containing a failure actualization risk is received by a process of the processor via the wireless communication unit.

7. The automobile according to Claim 6,
wherein the semiconductor device further has a nonvolatile memory in which third ID information identifying the semiconductor device is preliminarily stored, and
wherein in the case where the second ID list information is received via the wireless communication unit, the third ID information stored in the nonvolatile memory is read by a process of the processor, and it is determined whether or not the third ID is included in the received second ID list information.

8. The automobile according to Claim 7,
wherein information related to the determination result is transmitted via the wireless communication unit by a process of the processor.
